# EUROPÄISCHE PATENTSCHRIFT

(11) **EP 1 053 544 B1**
(45) Veröffentlichungstag und Bekanntmachung des Hinweises auf die Patenterteilung: **02.01.2002**
(21) Anmeldenummer: 99934227.2
(22) Anmeldetag: 22.01.1999
(51) Int. Cl.: G11B 7/085

(54) **VERFAHREN ZUR DURCHFÜHRUNG EINES SPURSPRUNGS**
METHOD FOR EXECUTING TRACK SKIPPING
PROCEDE D'EXECUTION D'UN SAUT DE PISTE

(30) Priorität: 05.02.1998 DE 19804544
(43) Veröffentlichungstag der Anmeldung: 22.11.2000
(73) Patentinhaber: ROBERT BOSCH GMBH, 70442 Stuttgart (DE)
(72) Erfinder: Maier, Jens, 31180 Giesen (DE); Zimmermann, Holger, 31141 Hildesheim (DE); Baas, Dieter, 77694 Auenheim (DE)
(86) Internationale Anmeldenummer: DE9900150
(87) Internationale Veröffentlichungsnummer: WO9940577

(56) Entgegenhaltungen:
- EP-A- 0 352 131
- US-A- 5 583 835

## Beschreibung

### Stand der Technik

Die Erfindung geht von einem Verfahren nach der Gattung des Hauptanspruchs aus.

Aus der GB 2 228 132 A ist bereits ein Steuersystem für eine Lesevorrichtung eines Abspielgerätes für optische Speicherplatten bekannt. Dabei werden Positionsdaten, die die aktuelle Position der Lesevorrichtung darstellen, von einer in das Abspielgerät eingelegten Speicherplatte gelesen. Der Abstand zwischen der aktuellen Position und einer Ausgangsposition der Lesevorrichtung wird gemäß der gelesenen Positionsdaten berechnet. Die Lesevorrichtung wird gemäß des berechneten Abstandes zur Ausgangsposition bewegt.

Aus der US 5 583 835 ist ein Spursuchverfahren für eine optische Speicherplatte, wie beispielsweise eine CD-ROM oder dergleichen bekannt. Für einen durchzuführenden Spursprung einer Abtastoptik von einer aktuellen Spur zu einer vorgegebenen Spur wird die zu überspringende Anzahl von Spuren ermittelt. Nach dem Spursprung wird die tatsächlich übersprungene Anzahl von Spuren mit der zu überspringenden Anzahl von Spuren verglichen und eine Differenz gebildet. Anschließend wird die Differenz ins Verhältnis zur Anzahl der zu überspringenden Spuren gesetzt, um einen Korrekturfaktor zu erhalten. Aus bei aufeinanderfolgenden Spursprüngen auf diese Weise ermittelten Korrekturfaktoren wird ein Mittelwert gebildet, der als Korrekturfaktor für einen nachfolgenden und für weitere Sprünge verwendet wird.

Aus der EP 0 352 131 A2 ist ein Spursprunggerät für eine optische Lesevorrichtung bekannt. Diese kann bei der Durchführung eines Spursprungs ein Spurfehlersignal detektieren und eine Beschleunigungs- oder Bremszeit für ein Sprungsignal bestimmen, indem sie das Spurfehlersignal mit einem Referenzwert vergleicht.

### Vorteile der Erfindung

Das erfindungsgemäße Verfahren mit den Merkmalen des Hauptanspruchs hat demgegenüber den Vorteil, daß nach Beendigung des Spursprungs von der Lesevorrichtung ausgelesene Positionsdaten mit für die vorgegebene Spur bekannten Positionsdaten verglichen werden und daß eine Korrektur eines nachfolgenden Spursprungs in Abhängigkeit einer Differenz zwischen den ausgelesenen und den bekannten Positionsdaten durchgeführt wird. Auf diese Weise läßt sich eine selbstlernende Sprungoptimierung realisieren.

Beim Spursprung durch Spuren zählen kann es vorkommen, daß durch Störungen der während des Sprungs ausgelesenen Spursignale über eine falsche Anzahl von Spuren gesprungen wird. Beim Spursprung durch Bewegung der Lesevorrichtung für eine berechnete Sprungzeit kommen äußere Einflüsse, wie beispielsweise Temperatur, Abnutzung usw. deutlicher zum Tragen. Die Präzision des Spursprungs hängt dabei von der durch die äußeren Einflüsse bestimmten Leichtgängigkeit der Bewegung der Lesevorrichtung ab. In den genannten Fällen ungenauer Spursprünge wird die vorgegebene Spur, d. h. also die Zielposition erst nach einem oder mehreren Korrektursprüngen erreicht. Dadurch wird die Zugriffszeit auf die vorgegebene Spur verlängert. Durch die Berücksichtigung der nach Beendigung des Spursprungs ermittelten Differenz zwischen den ausgelesenen und den für die vorgegebene Spur bekannten Positionsdaten läßt sich ein nachfolgender Spursprung so korrigieren, daß er mit einer größeren Genauigkeit seine Zielposition erreicht. Durch die auf diese Weise erfolgende ständige Überwachung der einzelnen Spursprünge können nachfolgende Spursprünge genauer werden, indem die Ungenauigkeit der vorherigen Sprünge durch die Korrektur immer besser ausgeglichen wird. Durch die auf diese Weise erreichte selbstlernende Sprungoptimierung lassen sich die Zugriffszeiten auf entsprechend vorgegebene Spuren mittels Spursprung sukzessive verkürzen, da Korrektursprünge in immer geringerem Maße erforderlich sind.

Durch die in den Unteransprüchen aufgeführten Maßnahmen sind vorteilhafte Weiterbildungen und Verbesserungen des im Hauptanspruchs angegebenen Verfahrens möglich.

Vorteilhaft ist dabei, daß der Spursprung über eine vorgegebene Anzahl von Spuren erfolgt, daß die vorgegebene Anzahl von Spuren mit einem einstellbaren Korrekturfaktor multipliziert wird, daß die Lesevorrichtung für die auf diese Weise korrigierte Anzahl von Spuren in Richtung zu der vorgegebenen Spur bewegt wird und daß nach Beendigung des Spursprungs der Korrekturfaktor in Abhängigkeit der Differenz zwischen den ausgelesenen und den bekannten Positionsdaten eingestellt wird. Auf diese Weise läßt sich die Korrektur von Spursprüngen über eine vorgegebene Anzahl von Spuren einfach mittels eines einstellbaren Korrekturfaktors optimieren, der bei vorherigen Spursprüngen aufgetretene Fehler in der Sprungweite berücksichtigt.

Vorteilhaft ist auch, daß ein Spursprung für eine vorgegebene Zeit erfolgt, daß die vorgegebene Zeit mit einem einstellbaren Korrekturfaktor multipliziert wird, daß die Lesevorrichtung die auf diese Weise korrigierte Zeit in Richtung zu der vorgegebenen Spur bewegt wird und daß nach Beendigung des Spursprungs der Korrekturfaktor in Abhängigkeit der Differenz zwischen den ausgelesenen und den bekannten Positionsdaten eingestellt wird. Auf diese Weise läßt sich auch für den Fall, daß ein Spursprung für eine vorgegebene Zeit durchgeführt wird, eine einfache Korrektur nachfolgender Spursprünge mittels eines einstellbaren Korrekturfaktors bewirken, der bei vorausgehenden Spursprüngen aufgetretene Fehler bei der Sprungweite berücksichtigt.

### Zeichnung

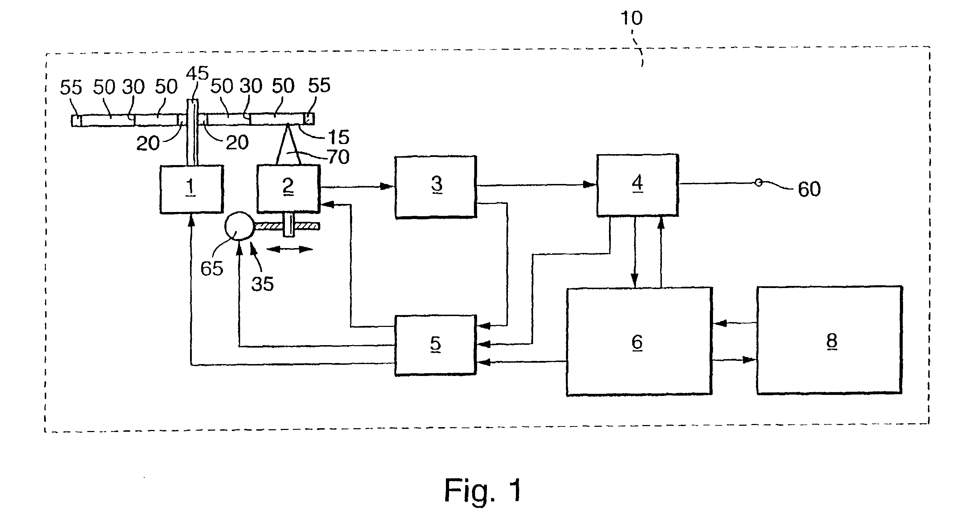

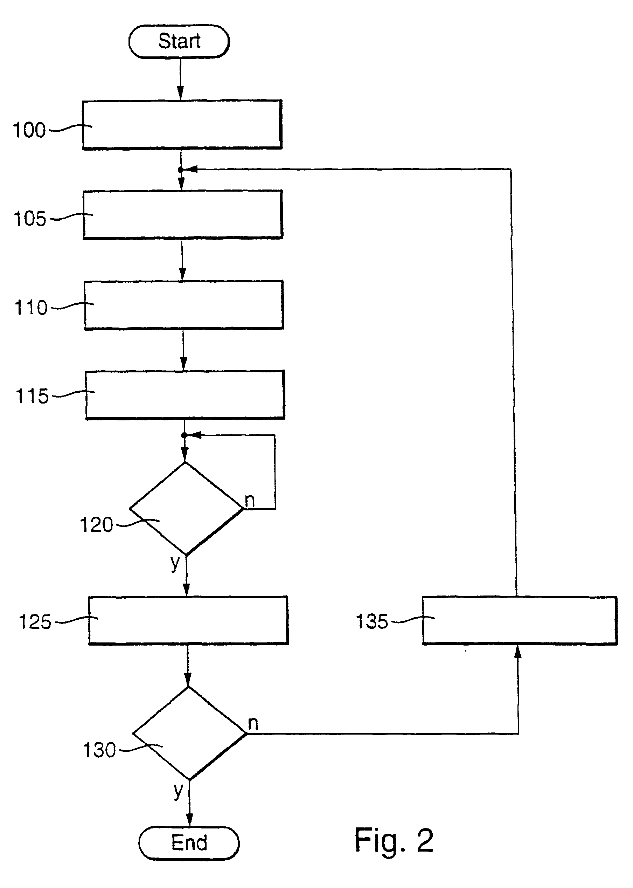

Ein Ausführungsbeispiel der Erfindung ist in der Zeichnung dargestellt und in der nachfolgenden Beschreibung näher erläutert. Es zeigen Figur 1 ein Blockschaltbild eines Abspielgerätes für optische Speicherplatten zur Durchführung des erfindungsgemäßen Verfahrens und Figur 2 einen Ablaufplan zur Beschreibung eines erfindungsgemäßen Korrekturvorgangs.

### Beschreibung des Ausführungsbeispiels

In Figur 1 kennzeichnet 10 ein beispielsweise als Compact-Disc-Spieler oder als CD-ROM-Laufwerk ausgebildetes Abspielgerät zum Abspielen optischer Speicherplatten 15, die beispielsweise als Compact-Disc oder als CD-ROM ausgebildet sein können. Das Abspielgerät 10 umfaßt einen Antriebsmotor 1 zum rotatorischen Antrieb einer in das Abspielgerät 10 eingelegten optischen Speicherplatte 15. Der Antrieb erfolgt dabei über eine mit dem Antriebsmotor 1 verbundene Achse 45, die einen in Figur 1 nicht dargestellten Plattenteller zur Aufnahme der optischen Speicherplatte 15 in Rotation versetzt. Eine Lesevorrichtung 2 mit einer in Figur 1 nicht dargestellten optischen Abtasteinheit erzeugt einen Lichtstrahl 70, der auf die optische Speicherplatte 15 zum Auslesen und Abtasten von auf der Speicherplatte 15 in Datenspuren aufgezeichneten Daten fokussiert ist. Die Lesevorrichtung 2 wird dabei durch einen Beförderungsmotor 65 einer Positioniervorrichtung 35 radial entlang einer Oberfläche der optischen Speicherplatte 15 bewegt. Die Lesevorrichtung 2 ist mit einer Detektionseinheit 3 verbunden. Die Detektionseinheit 3 ist an eine Signalverarbeitungseinheit 4 und eine Servoeinheit 5 angeschlossen. Die Signalverarbeitungseinheit 4 weist einen Ausgang 60 auf und ist mit einer Steuereinheit 6 und der Servoeinheit 5 verbunden. An die Steuereinheit 6 ist eine Eingabe-/ Anzeigeeinheit 8 angeschlossen, die auch nur als Eingabeeinheit ausgebildet sein kann. Die Steuereinheit 6 ist zudem mit der Servoeinheit 5 verbunden. Die Servoeinheit 5 wiederum steuert den Antriebsmotor 1, den Beförderungsmotor 65 und die Lesevorrichtung 2 an.

Die optische Speicherplatte 15 umfaßt einen Einlaufbereich 20, in dem ein als TOC (Table of Contents) bezeichnetes Inhaltsverzeichnis aufgezeichnet ist, einen Programmbereich 50, in dem Nutzdaten aufgezeichnet sind, die im Falle einer Compact Disc Musiksignale sein können, und einen Endbereich 55, in dem ein Programmendesignal aufgezeichnet ist. Die drei Bereiche 20, 50, 55 sind dabei in der beschriebenen Reihenfolge radial vom Inneren der optischen Speicherplatte 15 nach außen angeordnet. Das bedeutet, daß der Einlaufbereich 20 den innersten Bereich der optischen Speicherplatte 15 darstellt, daß der Endbereich 55 den äußersten Bereich der optischen Speicherplatte 15 darstellt und daß der Programmbereich 50 zwischen dem Einlaufbereich 20 und dem Endbereich 55 angeordnet ist. Das Inhaltsverzeichnis im Einlaufbereich 20 der Speicherplatte 15 umfaßt Daten, wie beispielsweise die Anzahl von aufgezeichneten Datengruppen, die im Falle einer Compact Disc Musikstücke sein können, die Anfangsadressen der Datengruppen im Programmbereich 50 der Speicherplatte 15 und die Gesamtspielzeit aller Datengruppen. Die Inhaltsverzeichnisdaten sind im Einlaufbereich 20 der Speicherplatte 15 wiederholt bis zur Startposition des Programmbereichs 50 aufgezeichnet. Die Nutzdaten im Programmbereich 50 sind in eine Vielzahl von Rahmen aufgeteilt, die jeweils ein Synchronisationssignal, einen Subcode von Steuerdaten, Datenbits von Nutzdaten und Fehlerkorrekturbits zur Fehlerkorrektur in den Datenbits umfassen. Die Subcodes umfassen ferner Adreßdaten der gerade ausgelesenen Datenspuren der Speicherplatte 15. Die Nutzdaten können im Fall der Ausbildung der Speicherplatte 15 als Compact Disc Musiksignale sein. Die auf der Speicherplatte 15 aufgezeichneten Daten werden von der Lesevorrichtung 2 optisch ausgelesen und einer optoelektrischen Umwandlung unterzogen. Das entsprechend umgewandelte elektrische Aufzeichnungssignal wird von der Lesevorrichtung 2 an die Detektionseinheit 3 abgegeben. Die Detektionseinheit 3 leitet das Aufzeichnungssignal an die Signalverarbeitungseinheit 4 weiter und gibt Fehlersignale an die Servoeinheit 5 ab. Die Fehlersignale umfassen dabei ein Fokusfehlersignal und ein Spurfehlersignal.

In der Signalverarbeitungseinheit 4 wird das Aufzeichnungssignal in ein digitales Signal umgeformt, um das Synchronisationssignal zu detektieren, das Nutzdatensignal zu demodulieren und den Subcode zu detektieren. Das Nutzdatensignal kann dabei für den Fall, daß es sich um ein Musiksignal bei Verwendung einer Compact Disc als Speicherplatte 15 handelt, einer Digital-/ Analogwandlung unterzogen und am Ausgang 60 der Signalverarbeitungseinheit 4 als analoges Audiosignal abgegeben werden. Ein Teil des Synchronisationssignals wird von der Signalverarbeitungseinheit 4 an die Servoeinheit 5 abgegeben. Der Subcode wird von der Signalverarbeitungseinheit 4 an die Steuereinheit 6 abgegeben.

In Antwort auf das Fehlersignal von der Detektionseinheit 3, das Synchronisationssignal der Signalverarbeitungseinheit 4 und Steuersignale von der Steuereinheit 6 gibt die Servoeinheit 5 Servosignale für einen Fokusservomechanismus, einen Spurservomechanismus, einen Beförderungsservomechanismus und einen Antriebsservomechanismus ab. Der Fokusservomechanismus und der Spurservomechanismus beeinflussen dabei ein Magnetfeld der in Figur 1 nicht dargestellten optischen Abtasteinheit der Lesevorrichtung 2, wobei in diesem Magnetfeld eine Linse der optischen Abtasteinheit frei beweglich aufgehängt ist. Die Linse dient dabei zur Fokussierung und Ausrichtung des Lichtstrahls 70 auf der Speicherplatte 15. Der Fokusservomechanismus umfaßt eine Fokusspule, die durch ein entsprechendes Servosignal von der Servoeinheit angesteuert wird, um den Lichtstrahl 70 auf einer reflektierenden Oberfläche der Speicherplatte 15 zu fokussieren. Dabei kann das Magnetfeld über die Fokusspule so beeinflußt werden, daß eine zur reflektierenden Oberfläche der Speicherplatte 15 senkrechte Bewegungsrichtung der Linse möglich ist. Der Spurservomechanismus umfaßt eine Spurspule, die ebenfalls durch ein entsprechendes Servosignal von der Servoeinheit 5 angesteuert wird, um den Lichtstrahl 70 auf eine gewünschte Spur auszurichten. Dabei kann das Magnetfeld durch die Spurspule so beeinflußt werden, daß eine Bewegung der Linse senkrecht zu den Spuren möglich ist. Der Beförderungsservomechanismus dient dazu, den Beförderungsmotor 65 so anzusteuern, daß die Lesevorrichtung 2 radial entlang der Oberfläche der Speicherplatte 15 bewegt wird. Der Antriebsservomechanismus dient dazu, daß der Antriebsmotor 1 linear mit einer konstanten Geschwindigkeit angetrieben wird.

Die Steuereinheit 6 kann als Mikrocomputer ausgebildet sein und gibt die Steuersignale zur Ansteuerung der oben beschriebenen verschiedenen Einheiten des Abspielgerätes ab.

Die Eingabe-/ Anzeigeeinheit 8 ermöglicht beispielsweise mittels einer Zehnertastatur eine Vorgabe einer Spur 30, zu deren Abtastung mittels des Lichtstrahls 70 die Lesevorrichtung 2 springen soll. Dabei kann es sich beispielsweise im Fall der Ausbildung der Speicherplatte 15 als Compact Disc bei der Eingabe um die Eingabe einer Titelnummer eines auf der Compact Disc aufgezeichneten Musikstücks handeln, so daß ein Spursprung zur Startadresse des gewünschten Musiktitels auf der Speicherplatte 15 veranlaßt wird. Eine als Ziel eines Spursprungs vorgegebene Spur ist in Figur 1 durch das Bezugszeichen 30 gekennzeichnet und liegt in der Regel im Programmbereich 50.

Ein Spursprung der Lesevorrichtung 2 von einer aktuellen Spur zu einer vorgegebenen Spur 30 einer in das Abspielgerät 10 eingelegten optischen Speicherplatte 15 kann beispielsweise dadurch erfolgen, daß die zum Erreichen der vorgegebenen Spur 30 erforderliche, zu überspringende Spuranzahl in der Steuereinheit 6 ermittelt wird. Die Steuereinheit 6 veranlaßt dann über die Servoeinheit 5 die Positioniervorrichtung 35 dazu, die Lesevorrichtung 2 um die auf diese Weise vorgegebene Anzahl von Spuren von der aktuellen Spur zu der vorgegebenen Spur 30 zu bewegen. Zur Berücksichtigung von bei vorausgegangenen Spursprüngen aufgetretenen Abweichungen zwischen der nach dem jeweiligen Spursprung erreichten Spur und der jeweils vorgegebenen Spur wird die vorgegebene Anzahl von Spuren in der Steuereinheit 6 noch mit einem einstellbaren Korrekturfaktor multipliziert, so daß die Positioniervorrichtung 35 über die Servoeinheit 5 von der Steuereinheit 6 zu einem Spursprung um die korrigierte vorgegebene Anzahl von Spuren in Richtung zu der vorgegebenen Spur 30 veranlaßt wird. Nach Beendigung des Spursprungs hat die Lesevorrichtung 2 eine Spur erreicht, deren Positionsdaten sie ausliest. Die ausgelesenen Positionsdaten werden dann in der Steuereinheit 6 mit den für die vorgegebene Spur 30 bekannten Positionsdaten verglichen. In Abhängigkeit der Differenz zwischen den ausgelesenen und den bekannten Postionsdaten stellt dann die Steuereinheit 6 den Korrekturfaktor so ein, daß der durch seine Multiplikation mit den für den vorherigen Spursprung vorgegebenen unkorrigierten Anzahl von zu überspringenden Spuren resultierende Spursprung der Lesevorrichtung 2 exakt bis zur vorgegebenen Spur 30 geführt hätte, so daß der Lichtstrahl 70 die vorgegebene Spur 30 abgetastet hätte. Auf diese Weise kann ein nachfolgender Spursprung durch die Multiplikation der für den nachfolgenden Spursprung vorgegebenen Anzahl von zu überspringenden Spuren mit dem zuvor neu angepaßten Korrekturfaktor optimiert werden. Auf diese Weise ist eine selbstlernende Sprungoptimierung mittels des einstellbaren Korrekturfaktors möglich.

Neben der Ermittlung einer vorgegebenen Anzahl von bei einem Spursprung zu überspringenden Spuren wird von der Steuereinheit 6 eine Zeit ermittelt und vorgegeben, wobei die Steuereinheit 6 die Positioniervorrichtung 35 veranlaßt, die Lesevorrichtung 2 für diese vorgegebene Zeit von der aktuellen Spur zu der vorgegebenen Spur 30 zu bewegen. Der Spursprung erfolgt dann nicht wie zuvor beschrieben über eine vorgegebene Anzahl von Spuren, sondern für eine vorgegebene Zeit. Dabei kann in analoger Weise die vorgegebene Zeit mit einem einstellbaren Korrekturfaktor in der Steuereinheit 6 multipliziert werden, so daß die Lesevorrichtung 2 von der Positioniervorrichtung 35 für die auf diese Weise korrigierte Zeit in Richtung zu der vorgegebenen Spur 30 mittels der Positioniervorrichtung 35 bewegt wird. Dazu wird die Positioniervorrichtung 35 über die Servoeinheit 5 durch entsprechende Steuersignale der Steuereinheit 6 veranlaßt. Nach Beendigung des Spursprungs können dann wiederum die Positionsdaten der durch den Spursprung erreichten Spur ausgelesen werden und von der Steuereinheit 6 mit den für die vorgegebene Spur 30 bekannten Positionsdaten verglichen werden. Ebenso kann dann der Korrekturfaktor in Abhängigkeit der Differenz zwischen den ausgelesenen und den bekannten Positionsdaten wieder so eingestellt werden, daß seine Multiplikation mit der für den vorhergehenden Spursprung ermittelten vorgegebenen unkorrigierten Zeit zu einem Spursprung der Lesevorrichtung 2 exakt zu der vorgegebenen Spur 30 geführt hätte, so daß der Lichtstrahl 70 die vorgegebene Spur 30 nach Beendigung des Spursprungs abgetastet hätte. Auch auf diese Weise kann also eine Korrektur eines nachfolgenden Spursprungs in Abhängigkeit der Differenz zwischen den ausgelesenen und den bekannten Positionsdaten durchgeführt und die Sprungweite des nachfolgenden Spursprungs somit optimiert werden.

Durch die Verwendung des variabel anpaßbaren Korrekturfaktors haben durch äußere Einflüsse wie beispielsweise Temperatur, Abnutzung usw. bedingte Änderungen in der Leichtgängigkeit der Bewegung der Lesevorrichtung 2 bei Verwendung einer vorgegebenen Zeit zur Dimensionierung der Spursprünge oder Störungen beim Spuren zählen während eines Spursprungs durch Auslesefehler bei Verwendung einer vorgegebenen Anzahl von Spuren zur Dimensionierung des jeweiligen Spursprungs praktisch keinen Einfluß auf die Positionierungsgenauigkeit der Lesevorrichtung 2 für den jeweiligen Spursprung.

In Figur 2 ist ein Ablaufplan für den Korrekturvorgang und die Anpassung des Korrekturfaktors dargestellt. Der dargestellte Ablaufplan wird dabei von der Steuereinheit 6 abgearbeitet. Bei einem Programmpunkt 100 wird die aktuelle Position der Lesevorrichtung 2 anhand von ausgelesenen Positionsdaten oder einer Detektion einer bekannten Ausgangsposition, beispielsweise im Einlaufbereich 20, beispielsweise durch Betätigen eines in Figur 1 nicht dargestellten Schalters durch die Lesevorrichtung 2 ermittelt. Bei einem Programmpunkt 105 wird die für einen Spursprung von der aktuellen Spur zu der vorgegebenen Spur 30 erforderliche zu überspringende Spuranzahl oder Ansteuerzeit für den Beförderungsmotor 65 der Positioniervorrichtung 35 berechnet. Bei einem Programmpunkt 110 wird die unter Programmpunkt 105 ermittelte zu überspringende Spuranzahl bzw. Sprungzeit mit dem entsprechenden Korrekturfaktor multipliziert und dadurch korrigiert. Bei einem Programmpunkt 115 veranlaßt die Steuereinheit 6 die Positioniervorrichtung 35 über die Servoeinheit 5 zu einem Spursprung der Lesevorrichtung 2 über die korrigierte Anzahl von Spuren oder für die korrigierte Zeitdauer. Bei einem Programmpunkt 120 wird geprüft, ob der Sprung beendet ist. Ist dies der Fall, so wird zu einem Programmpunkt 125 verzweigt, andernfalls wird zu Programmpunkt 120 zurückverzweigt. Bei Programmpunkt 125 wird die nach Beendigung des Spursprungs erreichte Spur durch Auslesen ihrer im Subcode enthaltenen Positionsdaten ermittelt. Bei einem Programmpunkt 130 wird geprüft, ob die ausgelesenen Positionsdaten mit den für die vorgegebene Spur 30 bekannten Positionsdaten übereinstimmen. Ist dies der Fall, so wird der Programmteil verlassen, andernfalls wird zu einem Programmpunkt 135 verzweigt. Bei Programmpunkt 135 wird der Korrekturfaktor so angepaßt, daß seine Multiplikation beim vorherigen Spursprung mit der unkorrigierten vorgegebenen Anzahl von zu überspringenden Spuren bzw. vorgegebenen Sprungzeit zu einem Spursprung der Lesevorrichtung 2 geführt hätte, der exakt die vorgegebene Spur 30 erreicht hätte, so daß der Lichtstrahl 70 nach Beendigung des Spursprungs die vorgegebene Spur 30 abgetastet hätte. Nach Programmpunkt 135 wird zu Programmpunkt 105 zur Durchführung von Korrekturspursprüngen zurückverzweigt, um die vorgegebene Spur 30 mittels mindestens eines Korrekturspursprungs doch noch exakt zu erreichen. Dabei bleibt die vorgegebene Spur 30 weiterhin unverändert, während die aktuelle Spur als Ausgangsort für den mindestens einen erforderlichen Korrektursprung mit der beim vorhergehenden Spursprung erreichten Spur gleichgesetzt wird.

Der Korrekturfaktor kann in einem der Steuereinheit 6 zugeordneten und in Figur 1 nicht dargestellten Schreib-/ Lesespeicher abgespeichert sein. In diesem Speicher können nach erstmaligem Auslesen auch die aus dem Einlaufbereich 20 ermittelten Inhaltsdaten mit den Anfangsadressen der einzelnen auf der Speicherplatte 15 aufgezeichneten Datengruppen abgespeichert sein. Für den Fall, daß das Abspielgerät 10 als Compact-Disc-Spieler ausgebildet ist und an der Eingabe-/ Anzeigeeinheit 8 eine Titelnummer eines abzuspielenden Musikstücks eingegeben wurde, kann die für den erforderlichen Spursprung benötigte zu überspringende Anzahl von Spuren bzw. Sprungzeit mit Hilfe der der gewählten Titelnummer in dem in Figur 1 nicht dargestellten Speicher zugeordneten Anfangsadresse der entsprechenden Datengruppe ermittelt werden. Diese Anfangsadresse entspricht dabei gleichzeitig den für die vorgegebene Spur 30 bekannten Positionsdaten, die bei Programmpunkt 130 mit den nach dem entsprechenden Spursprung erreichten Positionsdaten verglichen werden.

## Patentansprüche

1. Verfahren zur Durchführung eines Spursprungs einer Lesevorrichtung (2) zwischen einer aktuellen Spur und einer vorgegebenen Spur (30) einer in ein Abspielgerät (10) eingelegten optischen Speicherplatte (15), wobei nach Beendigung des Spursprungs von der Lesevorrichtung (2) ausgelesene Positionsdaten mit für die vorgegebene Spur (30) bekannten Positionsdaten verglichen werden und eine Korrektur eines nachfolgenden Spursprungs in Abhängigkeit einer Differenz zwischen den ausgelesenen und den bekannten Positionsdaten durchgeführt wird, **dadurch gekennzeichnet, daß** ein Spursprung für eine vorgegebene Zeit erfolgt, daß die vorgegebene Zeit mit einem einstellbaren Korrekturfaktor multipliziert wird, daß die Lesevorrichtung (2) für die auf diese Weise korrigierte Zeit in Richtung zu der vorgegebenen Spur (30) bewegt wird und daß nach Beendigung des Spursprungs der Korrekturfaktor in Abhängigkeit der Differenz zwischen den ausgelesenen und den bekannten Positionsdaten eingestellt wird.

## Claims

1. Method for performance of a track jump of a reading device (2) between a current track and a predetermined track (30) of an optical storage disk (15) inserted into a playback apparatus (10), in which case position data read out after the end of the track jump by the reading device (2) are compared with known position data for the predetermined track (30) and correction of a subsequent track jump is performed in a manner dependent on a difference between the read-out and the known position data, **characterized in that** a track jump is effected for a predetermined time, **in that** the predetermined time is multiplied by an adjustable correction factor, **in that** the reading device (2) is moved in the direction of the predetermined track (30) for the time that has been corrected in this way, and **in that**, after the end of the track jump, the correction factor is set in a manner dependent on the difference between the read-out and the known position data.

## Revendications

1. Procédé pour effectuer un saut de piste dans un dispositif de lecture (2) entre une piste actuelle et une piste sélectionnée (30) d'un disque de mémoire optique (15) inséré dans un appareil récepteur audio (10), dans lequel, après le saut de piste, les données de position lues par le dispositif de lecture (2) sont comparées aux données de position connues de la piste sélectionnée (30) et une correction d'un saut de piste ultérieur est effectuée en fonction d'une différence entre les données de position lues et les données de position connues,
**caractérisé en ce qu'**
un saut de piste est effectué pour un temps prédéterminé, le temps prédéterminé est multiplié par un facteur de correction réglable, le dispositif de lecture (2) est déplacé en direction de la piste sélectionnée (30) pour le temps corrigé de cette façon, et à la suite du saut de piste le facteur de correction est réglé en fonction de la différence entre les données de position lues et les données de position connues.
